# EUROPÄISCHE PATENTANMELDUNG

(11) **EP 1 136 941 A1**
(43) Veröffentlichungstag der Anmeldung: **26.09.2001**
(21) Anmeldenummer: 00106472.4
(22) Anmeldetag: 24.03.2000
(51) Int. Cl.: G06K 19/07, G06K 19/073

(54) **Tragbare Datenträgeranordnung**

(71) Anmelder: Infineon Technologies AG, 81669 München (DE)
(72) Erfinder: Winkler, Otto, 84332 Herbertsfelden (DE); Wallstab, Stefan, 81739 München (DE)
(74) Vertreter: Fischer, Volker, Dipl.-Ing.

(57) **Zusammenfassung**

Die Erfindung schlägt eine tragbare Datenträgeranordnung vor mit einem Datenspeicher und einer Steuereinheit, die jeweils als integrierte Schaltungen ausgeführt sind, wobei die Steuereinheit mit Mitteln zur Verbindungsherstellung zu einer externen Schreib- und Leseeinheit versehen ist. Dabei erzeugt die Steuereinheit zumindest ein analoges Signal.

## Beschreibung

Die Erfindung betrifft eine tragbare Datenträgeranordnung mit einem Datenspeicher und einer Steuereinheit, die jeweils als integrierte Schaltung ausgeführt sind, wobei die Steuereinheit mit Mitteln zur Verbindungsherstellung zu einer externen Schreib- und Leseeinheit versehen ist.

Es sind Datenaustausch- und Datenverarbeitungssysteme mit einer Vielzahl solcher tragbarer Datenträgeranordnungen bekannt, die nach Bedarf mit einer Schreib- und Leseeinheit in Verbindung gebracht werden können, um Daten austauschen zu können. Datenträgeranordnungen der genannten Art, die neben ausreichender Speicherkapazität auch mit einer Steuereinheit ausgestattet sind, ermöglichen nicht nur einen interaktiven Daten- und Signalaustausch mit der externen Schreib- und Leseeinheit, sondern auch eine dezentralisierte Datenverarbeitung und -speicherung in den individuellen, intelligenten Datenträgeranordnungen, wodurch sich äußerst vielfältige und hoch entwickelte Anwendungsmöglichkeiten ergeben. Solche Datenträgeranordnungen werden typischerweise in Kartenform (zum Beispiel im Kreditkartenformat) mit eingelagerten integrierten Schaltungsbausteinen ausgeführt (sogenannte Chipkarten).

Daneben existieren auch eine Vielzahl an anderen Datenträgeranordnungen. Beispielsweise werden tragbare Datenträgeranordnungen häufig dazu verwendet, digitalisierte Audio- oder Videodaten zu speichern.

Bei fast allen Anwendungen solcher Datenaustauschsysteme ist eine der wichtigsten Voraussetzungen die Sicherheit vor Manipulationen und mißbräuchlichem beziehungsweise unbefugtem Zugriff auf gespeicherte und übermittelte Informationen. Hohe Sicherheitsanforderungen bestehen insbesondere wegen der großen Verbreitung der tragbaren Datenträgeranordnungen. Für die oben genannten Chipkarten wurden in der Vergangenheit hohe Sicherheitsmaßnahmen getroffen. Bei tragbaren Datenträgeranordnungen, die digitalisierte Audio- oder Videodaten speichern, stellt sich jedoch das Problem, daß Anwender auf einfache Weise in der Lage sind, eine beliebige Anzahl an Kopien der gespeicherten Video- oder Audiodaten herzustellen. Da beim Kopieren derart digitalisierter Daten kein Qualitätsverlust auftritt, könnte eine unerwünschte Vervielfältigung und ein Vertrieb der Daten erfolgen. Hierdurch entsteht dem Urheber ein nicht unbeträchtlicher materieller Schaden.

In diesem Zusammenhang ist aus der EP 0 337 185 B1 eine tragbare Datenträgeranordnung bekannt, die eine Steuereinheit und einen Datenspeicher aufweist, wobei die Steuereinheit und der Datenträger jeweils als integrierte Schaltung ausgeführt sind. Die Steuereinheit verfügt über Mittel zur Verbindungsherstellung zu einer externen Schreib- und Leseeinheit. Es ist weiterhin ein zusätzlicher Datenspeicher auf dem tragbaren Datenträger vorgesehen, dessen Ansteuerung von der Steuereinheit her autark durch eine Kodierung geschützt ist. Die integrierten Schaltungen können in zwei oder mehrere, durch Leitungen verbundene Bausteine aufgeteilt oder auf einem einzigen Substrat vereint sein. Es sind dort sowohl sogenannte "Multi-Chip-" oder "Single-Chip-Ausführungen" denkbar. Die eingangs beschriebene Problematik liegt auch bei der EP 0 337 185 B1 vor.

Die Aufgabe der vorliegenden Erfindung besteht deshalb darin, die auf einem tragbaren Datenträger gespeicherten digitalisierten Daten gegen ein Kopieren ohne Qualitätsverlust zu schützen.

Diese Aufgabe wird mit den Merkmalen des Patentanspruches 1 gelöst.

Die Erfindung geht von der Erkenntnis aus, daß ein Kopieren von Analogdaten im Gegensatz zu Digitaldaten unkritisch ist.

Hieraus folgt, daß die bis zur Digital-Analogwandlung digitalisierten Daten vor einem unbefugten Zugriff geschützt werden müssen, während sie nach der Digital-Analogwandlung kopiert werden können. Erfindungsgemäß ist vorgesehen, daß die Steuereinheit zumindest ein analoges Signal erzeugt. Das zumindest eine analoge Signal, das an die externe Schreib- und Leseeinheit übertragen wird, kann dann von den Benutzern beliebig abgegriffen werden. Kopien, die von den digitalisierten Daten, die in dem Datenspeicher vorliegen, hergestellt werden, sind jedoch qualitativ erheblich schlechter als das Original.

Um ein Abgreifen des zumindest einen analogen Signals zu ermöglichen, verfügt das Mittel zur Verbindungsherstellung über eine Mehrzahl an Kontakten, wobei zumindest einer der zur Übertragung von Daten vorgesehenen Kontakte mit einem Digital-Analogwandler der Steuereinheit verbunden ist. Es ist somit denkbar, sofern die Daten auf serielle Weise an einem der Kontakte zur Verfügung gestellt werden, dieses Datensignal vollständig zu analogisieren. Es könnten jedoch auch nur einzelne Bits (zum Beispiel das "most significant bit" MSB) analogisiert werden. Bei einer parallelen Datenübertragung über eine Mehrzahl an Kontakten ist es im einfachsten Fall ausreichend, ein Datensignal zu analogisieren. Es wäre jedoch dann auch denkbar, jedes der parallel übertragenen Datensignale als Analogsignal an den Kontakten zur Verfügung zu stellen. In diesem Fall wäre der bestmögliche Schutz gegen ein qualitätsfreies kopieren der digitalisierten Daten im Datenspeicher sichergestellt.

In einer vorteilhaften Ausgestaltung dekomprimiert und/oder dekodiert die Steuereinheit die von dem Datenspeicher empfangenen Daten. Vorteilhafterweise ist im Datenspeicher und der Steuereinheit jeweils ein Prozessor zum gesicherten, das heißt kodierten oder verschlüsselten, Datenaustausch zugeordnet. Hierdurch soll ein unbefugter Zugriff auf die digitalisierten Daten in dem Datenspeicher oder auf einer der Verbindungsleitungen zu der Steuereinheit verhindert werden.

Der größte Schutz wird dadurch erzielt, daß die integrierte Schaltung für die Dekomprimierung, der Digital-Analogwandler und der Massenspeicher auf ein und demselben Halbleiterchip untergebracht sind. Da eine derartige Variante jedoch mit hohen Kosten verbunden ist, ist es vorteilhaft, die tragbare Datenträgeranordnung aus einem ersten und einem zweiten Modul herzustellen, wobei das erste und das zweite Modul miteinander lösbar verbindbar sind und wobei in dem ersten Modul der Datenspeicher und in dem zweiten Modul die Steuereinheit mit den Mitteln zur Verbindungsherstellung untergebracht ist.

Vorteilhafterweise sind das erste und das zweite Modul zur bestimmungsgemäßen Funktion der tragbaren Datenträgeranordnung übereinanderliegend fest verbunden, so daß Kontaktstellen der integrierten Schaltungen in dem ersten und in dem zweiten Modul elektrisch leitend verbunden sind. Neben einer wahlweise verschlüsselten Datenübertragung zwischen dem ersten und dem zweiten Modul findet eine gegenseitige Authentifizierung der beiden Module statt. Eine Überprüfung kann anhand physikalischer Effekte, zum Beispiel einer Kapazität, optischen Eigenschaften des ersten beziehungsweise zweiten Moduls, einer Induktivität, einer Stromaufnahme oder einem Zeitverhalten erfolgen. Zusätzlich kann die Sicherheit erhöht werden, wenn die räumliche Nähe des ersten und des zweiten Moduls überprüft wird, bevor ein Datenaustausch zwischen dem ersten und dem zweiten Modul ermöglicht wird. Die Überprüfung der räumlichen Nähe der beiden Module findet dabei vorteilhafterweise bereits vor der Autentifizierung statt. Wenn die Überprüfung der Echtheit und der räumlichen Nähe sichergestellt ist, kann beispielsweise nach dem sogenannten Diffie-Hillman-Verfahren ein gemeinsamer Schlüssel vereinbart werden. Unerwünschte Angriffe auf die digitalisierten Daten sind bei der erfindungsgemäßen Anordnung gegen das Diffie-Hillman-Verfahren nicht möglich.

In einer vorteilhaften Ausgestaltung der Erfindung weist auch das erste Modul Mittel zur Verbindungsherstellung zu einer externen Schreib- und Leseeinheit auf. In diesem Fall ist es möglich, Daten direkt in den Datenspeicher zu schreiben, ohne eine Analog-Digitalwandlung vornehmen zu müssen.

Weitere Merkmale und Vorteile der Erfindung ergeben sich aus den nachstehenden Figuren und der zugehörigen Beschreibung. Es zeigen:
- Figur 1: eine Draufsicht auf das erste Modul der erfindungsgemäßen tragbaren Datenträgeranordnung,
- Figur 2: eine Draufsicht auf das zweite Modul der erfindungsgemäßen Datenträgeranordnung,
- Figur 3: einen Querschnitt durch das erste Modul aus Figur 1,
- Figur 4: einen Querschnitt durch das zweite Modul aus Figur 2,
- Figur 5: einen Querschnitt durch die zusammengesetzten ersten und zweiten Module der Datenträgeranordnung und
- Figur 6: eine schematische Darstellung der erfindungsgemäßen Datenträgeranordnung.

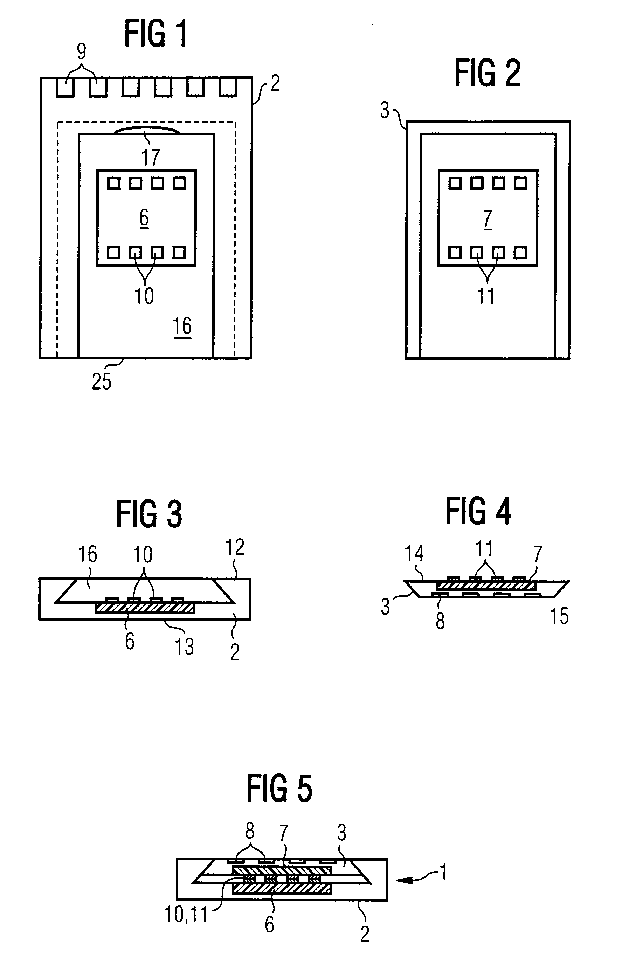

Die Figur 1 zeigt die Draufsicht auf eine erste Hauptseite 12 eines ersten Moduls 2 der erfindungsgemäßen tragbaren Datenträgeranordnung. Von der ersten Hauptseite 12 her ist in das erste Modul 2 eine Ausnehmung 16 eingebracht. Die in die Fläche des ersten Moduls 2 hineinlaufenden Seitenkanten der Ausnehmung 16 sind derart angewinkelt, daß die Seitenkante in der Ebene der ersten Hauptfläche 12 weiter vom Außenrand des ersten Moduls 2 entfernt ist als die im Inneren des ersten Moduls 2 liegende Seitenkante. Dies geht insbesondere aus dem Querschnitt der Figur 3 gut hervor. Das erste Modul 2 weist ferner einen Halbleiterchip 6 auf, der einen Datenspeicher enthält. Der Halbleiterchip 6 weist an der zu der ersten Hauptseite des Moduls 2 zugewandten Seite Kontaktstellen 10 auf. Über diese Kontaktstellen 10 kann der Halbleiterchip 6 kontaktiert werden. Die Kontaktstellen 10 können beispielsweise auch über Leiterzüge mit entsprechenden Kontaktpads des Halbleiterchips 6 in Verbindung stehen. Ferner ist auf dem ersten Modul 2 eine Mehrzahl an Kontakten 9 vorgesehen, die (innerhalb des Gehäuses) mit dem Halbleiterchip 6 verbunden sind. Über die Kontakte 9 können lediglich digitalisierte Daten in den Halbleiterchip 6 geschrieben werden. Ein Lesen von Daten aus dem Datenspeicher in dem Halbleiterchip 6 über die Kontakte 9 ist hingegen nicht möglich.

In der Figur 2 ist die Draufsicht auf ein zweites Modul 3 der erfindungsgemäßen tragbaren Datenträgeranordnung dargestellt. Die Seitenkanten des zweiten Moduls 3 sind an den Verlauf der Seitenkanten der Ausnehmung 16 angepaßt. Das zweite Modul 3 kann somit in die Ausnehmung 16 von der Seitenkante 25 her in das erste Modul 2 hineingeschoben werden. Dabei ist eine Ausgestaltung des ersten und des zweiten Moduls dergestalt möglich, daß das zweite Modul 3 in dem ersten Modul 2 einrastet. Über eine Vertiefung 17, die in Figur 1 dargestellt ist, kann das zweite Modul 3 beispielsweise wieder in Richtung der Seitenkante 25 verschoben und aus dem Modul 2 entnommen werden.

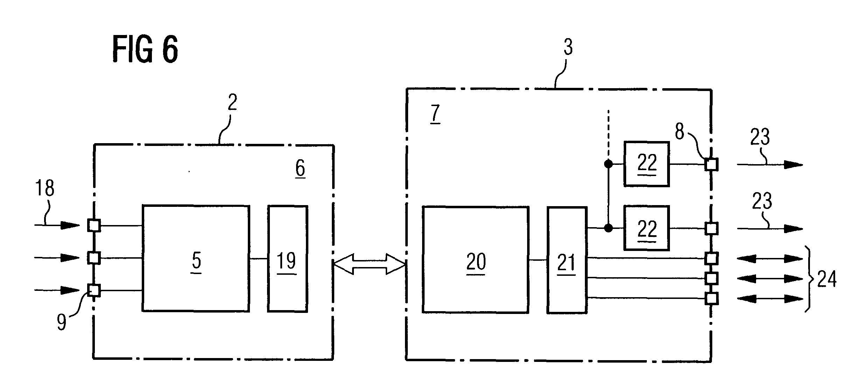

Das zweite Modul 3 weist einen Halbleiterchip 7 mit einer Steuereinheit auf, der über Kontaktstellen 11 von außen her elektrisch kontaktierbar ist. Befindet sich das zweite Modul 3 in dem ersten Modul 2 kommen die Kontaktstellen 10 und 11 der Halbleiterchips 6 und 7 genau übereinander zum Liegen. Die Halbleiterchips 6 und 7 kommen somit einander zugewandt in der Datenträgeranordnung zum Liegen. Dies wird beispielsweise aus der Figur 5, in der ein Querschnitt durch die erfindungsgemäße Datenträgeranordnung dargestellt ist, ersichtlich. Der Halbleiterchip 7 dekodiert und dekomprimiert die von dem Datenspeicher (in dem Halbleiterchip 6) empfangenen Daten und führt zumindest ein Datensignal über einen Digital-Analog-Wandler einem Kontakt 8 zu, der von außen kontaktierbar ist. Über einen einzigen oder einige der Kontakte 8 werden Daten zu einem externen Schreib- und Lesegerät übertragen. Die übrigen Kontakte 8 werden dazu verwendet, den Halbleiterchip 7 mit einem Versorgungspotential zu versehen und Steuerdaten auszutauschen.

Ein Datenaustausch zwischen dem Halbleiterchip 6 und dem Halbleiterchip 7 findet nur dann statt, wenn zum einen die räumliche Nähe des ersten und des zweiten Moduls 2, 3 überprüft wurde und anschließend eine gegenseitige Autentifizierung durch einen jeweils in den Halbleiterchips 6, 7 angeordneten Prozessor stattgefunden hat. Eine Überprüfung der Echtheit, das heißt der tatsächlichen Zusammengehörigkeit des ersten und des zweiten Moduls 2, 3 kann beispielsweise anhand physikalischer Eigenschaften vorgenommen werden. Hierzu bieten sich beispielsweise die Überprüfung von Kapazitäten, Induktivitäten, Zeitverhalten beim Eintreten von Signalen, optische Eigenschaften oder eine vorgegebene Stromaufnahme an.

Die Befestigung des ersten und des zweiten Moduls 2, 3 könnte prinzipiell auf jede beliebige Art und Weise erfolgen. Die in den Figuren 1 bis 5 dargestellten Ausführungsbeispiele stellen lediglich eine Möglichkeit dar. Eine Befestigung könnte beispielsweise auch über Magnetismus oder über Adhäsion erfolgen.

Figur 6 zeigt schematisch die Funktionsweise der erfindungsgemäßen tragbaren Datenträgeranordnung. Das erste Modul 2 weist einen Halbleiterchip auf, der einen Datenspeicher und einen Prozessor zur Authentifikation beinhaltet. Es ist auch denkbar, den Datenspeicher und den Prozessor für die Authentifikation in getrennten Halbleiterchips auf dem ersten Modul unterzubringen. Über Kontakte 9, können Daten in den Datenspeicher über ein externes Schreib-Lesegerät geschrieben werden. Ein Lesen der Daten aus dem Datenspeicher 5 über die Kontakte 9 ist hingegen nicht möglich.

Das zweite Modul 3 weist ebenfalls einen Halbleiterchip 7 auf, der einen Prozessor zur Autentifikation, eine Dekodierung beziehungsweise Dekomprimierung und eine entsprechend der Anwendung gewünschte Anzahl an Digital-Analog-Wandlern 22 aufweist. Die aufgezählten Komponenten könnten jeweils auf dem zweiten Modul 3 in einer Mehrzahl von Halbleiterchips untergebracht und über Leiterzüge miteinander verbunden sein. Jeder der Digital-Analogwandler ist ausgangsseitig mit einem Kontakt 8 verbunden, an dem dann ein analoges Ausgangssignal abgegriffen werden kann. Ein zuverlässiger Kopierschutz ist bereits dann erreicht, wenn lediglich ein Datensignal an dem Kontakt 8 in analoger Form vorliegt. Werden die Daten parallel über eine Mehrzahl an Kontakten 8 zur Verfügung gestellt, könnte jeder dieser Kontakte mit einem Digital-Analogwandler verbunden sein und somit ein analoges Signal verfügbar machen. Denkbar wäre jedoch auch, lediglich einen Teil der Datensignale über einen Digital-Analogwandler umzusetzen. In der vorliegenden Figur 6 sind drei Kontakte 8 direkt mit der Dekodierung beziehungsweise Dekomprimierung verbunden. Es könnten selbstverständlich auch mehr oder weniger Kontakte sein. Über diese Kontakte werden lediglich Steuersignale oder Versorgungspotentiale der Steuereinheit zugeführt oder abgegriffen. An diesen Kontakten können weiterhin digitale Signale übertragen werden, ohne den gewollten Schutz zu verringern.

Sind in dem Datenspeicher Stereo-Audiodaten gespeichert, so ist es zweckmäßig, in der Steuereinheit zwei Digital-Analogwandler vorzusehen. Beinhaltet der Datenspeicher Farb-Videodaten, so sollte die Steuereinheit drei Digital-Analogwandler aufweisen. Die analogen Signale umfassen dabei beispielsweise eine oder mehrere der am meisten signifikanten Bits des im Datenspeicher digitalen Signals. Die entsprechenden Bits des Digitalsignales werden dann bei der Übertragung weggelassen.

### Bezugszeichenliste

- 1: Tragbare Datenträgeranordnung
- 2: Erstes Modul
- 3: Zweites Modul
- 4: Datenspeicher
- 5: Steuereinheit
- 6: Halbleiterchip
- 7: Halbleiterchip
- 8: Kontakte
- 9: Kontakte
- 10: Kontaktstelle
- 11: Kontaktstelle
- 12: Erste Hauptseite
- 13: Zweite Hauptseite
- 14: Erste Hauptseite
- 15: Zweite Hauptseite
- 16: Ausnehmung
- 17: Vertiefung
- 18: Digitales Eingangssignal
- 19: Authentifikation
- 20: Authentifikation
- 21: Dekodierung/Dekomprimierung
- 22: Digital-Analogwandler
- 23: Analoges Ausgangssignal
- 24: Signal (analog oder digital)
- 25: Seitenkante

## Patentansprüche

1. Tragbare Datenträgeranordnung mit einem Datenspeicher (4) und einer Steuereinheit (5), die jeweils als integrierte Schaltung ausgeführt sind, wobei die Steuereinheit (5) mit Mitteln zur Verbindungsherstellung (8) zu einer externen Schreib- und Leseeinheit versehen ist,
**dadurch gekennzeichnet,**
**daß** die Steuereinheit (5) zumindest ein analoges Signal (23) erzeugt.

2. Tragbare Datenträgeranordnung nach Anspruch 1,
**dadurch gekennzeichnet,**
**daß** das zumindest eine analoge Signal (23) an die externe Schreib- und Leseeinheit übertragen wird.

3. Tragbare Datenträgeranordnung nach Anspruch 1 oder 2,
**dadurch gekennzeichnet,**
**daß** die Mittel zur Verbindungsherstellung eine Mehrzahl an Kontakten (8) aufweisen, wobei zumindest einer der zur Übertragung von Daten vorgesehenen Kontakte (8) mit einem Digital-Analogwandler in der Steuereinheit verbunden ist.

4. Tragbare Datenträgeranordnung nach einem der Ansprüche 1 bis 3,
**dadurch gekennzeichnet,**
**daß** die Steuereinheit (5) die von dem Datenspeicher (4) empfangenen Daten dekomprimiert und/oder dekodiert.

5. Tragbare Datenträgeranordnung nach einem der Ansprüche 1 bis 4,
**dadurch gekennzeichnet,**
**daß** im Datenspeicher (4) und der Steuereinheit (5) jeweils ein Prozessor (19, 20) zum gesicherten (kodierten oder verschlüsselten) Datenaustausch zugeordnet ist.

6. Tragbare Datenträgeranordnung nach einem der Ansprüche 1 bis 5,
**dadurch gekennzeichnet,**
**daß** die tragbare Datenträgeranordnung aus einem ersten und einem zweiten Modul (2, 3) besteht, die miteinander lösbar verbindbar sind, wobei in dem ersten Modul der Datenspeicher und in dem zweiten Modul die Steuereinheit mit den Mitteln zur Verbindungsherstellung untergebracht ist.

7. Tragbare Datenträgeranordnung nach Anspruch 6,
**dadurch gekennzeichnet,**
**daß** das erste und das zweite Modul (2, 3) zur bestimmungsgemäßen Funktion der Datenträgeranordnung übereinanderliegend fest verbunden sind, so daß Kontaktstellen (8, 9) der integrierten Schaltungen in dem ersten und in dem zweiten Modul (2, 3) elektrisch leitend verbunden sind.

8. Tragbare Datenträgeranordnung nach Anspruch 6 oder 7,
**dadurch gekennzeichnet,**
**daß** die räumliche Nähe des ersten und des zweiten Moduls (2, 3) überprüft wird, bevor ein Datenaustausch zwischen dem ersten und dem zweiten Modul möglich ist.

9. Tragbare Datenträgeranordnung nach einem der Ansprüche 1 bis 8,
**dadurch gekennzeichnet,**
**daß** das erste Modul (2) Mittel zur Verbindungsherstellung (9) zu einer externen Schreib- und Leseeinheit aufweist.
